# EUROPEAN PATENT APPLICATION

(11) **EP 4 708 119 A1**
(43) Date of publication of application: **11.03.2026**
(21) Application number: 25193770.2
(22) Date of filing: 04.08.2025
(51) Int. Cl.: G06F 40/56, G06F 40/30, G06F 40/20, G06F 8/35, G06N 3/0475

(54) **MODULAR SUBSEQUENT GENERATIONS OF DEDICATED INTERMEDIATE REPRESENTATIONS**

(30) Priority: 28.08.2024 US 202418818325
(71) Applicant: SAP SE, 69190 Walldorf (DE)
(72) Inventor: Kunz, David, Walldorf (DE)
(74) Representative: Müller-Boré & Partner Patentanwälte PartG mbB

(57) **Abstract**

In an example embodiment, a feature tree of all features in a request is generated. This feature tree describes interrelations between features that are dependent upon one another. The request is then broken into multiple, smaller requests. More particularly, each feature is included in its own dedicated request. Based on the dependencies, the smaller requests are then sent to the LLM in an order that preserve the dependency relationships. Intermediate results generated by the LLM in response to the multiple smaller request are then merged into a single intermediate result that can then be passed to the programmatic component for compiling.

## Description

### TECHNICAL FIELD

This document generally relates to computer systems. More specifically, this document relates to use of large language models.

### BACKGROUND

A large language model (LLM) refers to an artificial intelligence (A1) system that has been trained on an extensive dataset to understand and generate human language. These models are designed to process and comprehend natural language in a way that allows them to answer questions, engage in conversations, generate text, and perform various language-related tasks.

### BRIEF DESCRIPTION OF DRAWINGS

The present disclosure is illustrated by way of example and not limitation in the figures of the accompanying drawings, in which like references indicate similar elements.
Figure 1 is a block diagram illustrating a system for automatically generating a CDS model object from natural language text, in accordance with an example embodiment.
Figure 2 is a diagram illustrating an example of a tree structure, in accordance with an example embodiment.
Figure 3 is a flow diagram illustrating a method for automatically generating and refining an object from natural language text, in accordance with an example embodiment.
Figure 4 is a block diagram illustrating an architecture of software, which can be installed on any one or more of the devices described above.
Figure 5 illustrates a diagrammatic representation of a machine in the form of a computer system within which a set of instructions may be executed for causing the machine to perform any one or more of the methodologies discussed herein, according to an example embodiment.

### DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

LLMs are highly capable of generating text and even computer code (to be compiled into running software). LLMs, however, are limited due to the fact that their existing knowledge is limited by their training data. The result is that the output is not always correct. There are ways to reduce the impact of this limitation, such as by crafting appropriate system messages, adding external data through generated function invocations, or fine-tuning the foundation models, but these solutions are not perfect and still result in erroneous output. These limitations are amplified when the LLM is outputting compilable computer code, where it is not only important that the substance of the output be correct but also that the syntax and formatting be correct.

Indeed, certain types of compilable computer code may be even more difficult for an LLM to generate correctly, due to a number of factors, such as the compilable computer code type being one that is proprietary or at least partially proprietary (and thus in a format that is difficult to train an LLM on), and the compilable computer code type being one that is difficult to change once it is generated.

In an example embodiment, rather than use an LLM to directly generate desired computer code, an intermediate representation is generated by the LLM. The LLM is used to generate the portion of the computer code that cannot be computed programmatically (which may be called the "creative" part for purposes of the present disclosure). The intermediate representation can then be fed into a separate programmatic component that compiles the intermediate representation into compilable computer code. This compiling may involve, for example, sanitizing the intermediate representation, enhancing the intermediate representation, and formatting the intermediate file, as well as modifying the intermediate representation based on a feature set.

The programmatic component does not learn from data and is not influenced by machine learning techniques. Typically, a programmatic component consists of algorithms designed and coded manually by humans, relying on human expertise and knowledge to solve specific problems.

In contrast, the LLM is designed to learn patterns and relationships from data, allowing them to improve their performance over time. LLMs differ from programmatic components in that they can adapt and optimize based on the data they are exposed to.

The technical advantages of using this approach over alternative methods to automatically create computer code are (1) it is faster; (2) it consumes fewer tokens (which makes it less expensive); (3) the intermediate representation can be validated and repaired if need be, making the resultant generated computer code less likely to contain errors.

A technical issue that can arise with such a solution, however, is that it can be difficult to scale. As the numbers of features and complexity of generation requests increase, the requests themselves can become too large for the LLM to handle, or at least handle well. Many LLMs have a hard limit on the number of input tokens, not only because large token inputs can increase costs but also because the processing time can exponentially increase as the number of tokens increases. Additionally, even when large input is capable of being processed by an LLM, when the number of input features is too great the influence of any one particular feature drops significantly, making it more likely that a key feature will be essentially ignored by the LLM when generating the intermediate representation.

In an example embodiment, a feature tree of all features in a request is generated. This feature tree describes interrelations between features that are dependent upon one another. The request is then broken into multiple, smaller requests. More particularly, each feature is included in its own dedicated request. Based on the dependencies, the smaller requests are then sent to the LLM in an order that preserve the dependency relationships. Intermediate results generated by the LLM in response to the multiple smaller requests are then merged into a single intermediate result that can then be passed to the programmatic component for compiling.

Cloud computing can be described as Internet-based computing that provides shared computer processing resources, and data to computers and other devices on demand. Users can establish respective sessions, during which processing resources, and bandwidth are consumed. During a session, for example, a user is provided on-demand access to a shared pool of configurable computing resources (e.g., computer networks, servers, storage, applications, and services). The computing resources can be provisioned and released (e.g., scaled) to meet user demand. An example cloud platform includes SAP Cloud Application Platform (CAP), from SAP SE of Walldorf, Germany. A cloud platform may run a data model infrastructure, where data models can be created and run.

One example of such a data model infrastructure is Core Data Services (CDS) from SAP SE of Walldorf, Germany. CDS enables service definitions and data models to be declaratively captured in plain object notations. CDS models are typically written in CDS language and then compiled. In an example embodiment, the aforementioned techniques are used to generate a CDS model (which is compliable computer code) by first using an LLM to generate an intermediate representation, such as a JavaScript Object Notation (JSON) file or an Extensible Markup Language (XML) file, and then passing the intermediate representation through a programmatic component to generate the final CDS computer code.

LLMs used to generate information are generally referred to as Generative Artificial Intelligence (GAI) models. A GAI model may be implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance.

The bidirectional encoder may be implemented as a Bidirectional Long Short-Tenn Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) that are designed to overcome the vanishing gradient problem in traditional RNNs, which can make it difficult to learn long-term dependencies in sequential data.

LSTMs include a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At cach time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model known as a transformer to language modelling. This is in contrast to prior art solutions that looked at a text sequence either from left to right or combined left to right and right to left. A bidirectionally trained language model has a deeper sense of language context and flow than single-direction language models.

More specifically, the transformer encoder reads the entire sequence of information at once, and thus is considered to be bidirectional (although one could argue that it is, in reality, non-directional). This characteristic allows the model to learn the context of a piece of information based on all of its surroundings.

In other example embodiments, a generative adversarial network (GAN) embodiment may be used. GAN is a supervised machine learning model that has two sub-models: a generator model that is trained to generate new examples, and a discriminator model that tries to classify examples as either real or generated. The two models are trained together in an adversarial manner (using a zero sum game according to game theory), until the discriminator model is fooled roughly half the time, which means that the generator model is generating plausible examples.

The generator model takes a fixed-length random vector as input and generates a sample in the domain in question. The vector is drawn randomly from a Gaussian distribution, and the vector is used to seed the generative process. After training, points in this multidimensional vector space will correspond to points in the problem domain, forming a compressed representation of the data distribution. This vector space is referred to as a latent space, or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, although a clever property of the GAN architecture is that the training of the generative model is framed as a supervised learning problem.

The two models, the generator and discriminator, are trained together. The generator generates a batch of samples, and these, along with real examples from the domain, are provided to the discriminator and classified as real or fake.

The discriminator is then updated to get better at discriminating real and fake samples in the next round, and importantly, the generator is updated based on how well, or not, the generated samples fooled the discriminator.

In another example embodiment, the GAI model is a Variational AutoEncoders (VAEs) model. VAEs comprise an encoder network that compresses the input data into a lower-dimensional representation, called a latent code, and a decoder network that generates new data from the latent code. In either case, the GAI model contains a generative classifier, which can be implemented as, for example, a naive Bayes classifier.

The present solution works with any type of GAI model, although an implementation that specifically is used with a GPT model will be described.

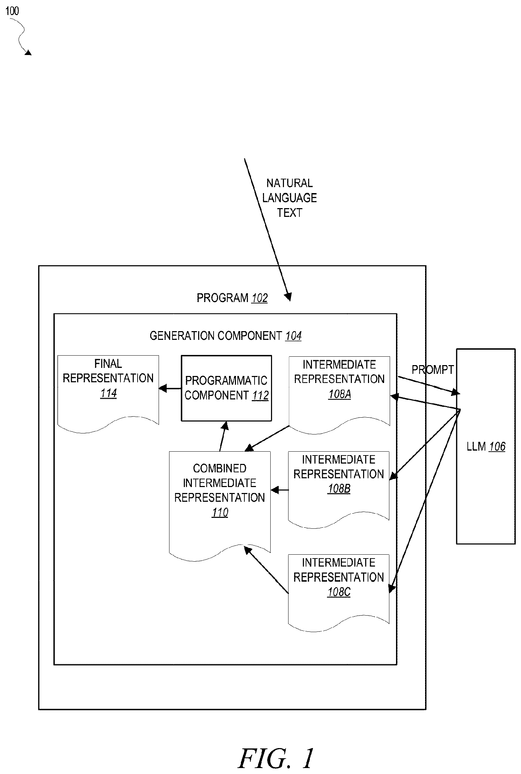

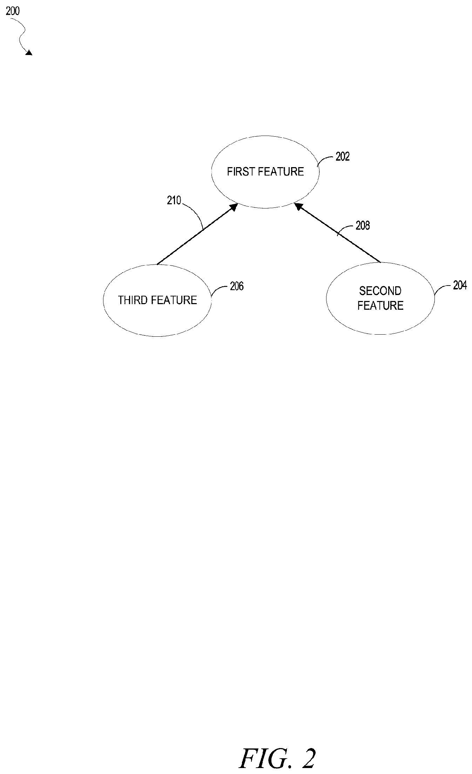

Figure 1 is a block diagram illustrating a system 100 for automatically generating a CDS model object from natural language text, in accordance with an example embodiment. Here, a program 102 contains a generation component 104 that receives natural language text from a user. The natural language text may include a plurality of features, each feature describing a different aspect of a desired result of output to be generated. The generation component 104 either generates or receives a tree structure representing dependencies between the features. Figure 2 is a diagram illustrating an example of a tree structure 200, in accordance with an example embodiment. Here, the tree structure contains, as nodes, a first feature 202, a second feature 204, and a third feature 206. Edge 208 indicates that the second feature 204 is dependent on the first feature 202. Edge 210 indicates that the third feature 206 is dependent on the first feature 202. Since there are no edges between the second feature 204 and the third feature 206, it is clear that neither is dependent on the other.

Referring back to Figure 1, in some example embodiments, this tree structure is provided to the generation component 104, either as part of the natural language text or separately. In other example embodiments, the tree structure may be generated by the generation component 104 based on known dependencies between features in or related tothe natural language query. Specific dependencies useful in responding to the natural language query can then be inferred based on the natural language query.

The generation component 104 then generates a plurality of requests based on the tree structure. More specifically, in an example embodiment, the generation component 104 generates a separate request for each feature (e.g., node) in the tree structure. The generation component 104 then forms a prompt for each of these requests, which includes a system message, the corresponding feature, and optionally some additional text from the natural language text. The prompts are then ordered based on the tree structure. More specifically, the prompts are ordered so that prompts containing features that are dependent on other features are after the prompts containing those other features. The prompts are then sent to the LLM 106, in the specified order. It should be noted that while the way this has been described implies that all the prompts are generated prior to any of the prompts being sent to the LLM 106, that is not necessarily so, and implementations are possible where a first prompt is generated and then sent to the LLM 106 and then the second prompt is generated and sent to the LLM 106 and so on. In this example embodiment, rather than the generated prompts being collectively ordered, the prompts themselves are generated one at a time in the order specified by the tree structure, allowing the generated prompts to be immediately sent to the LLM 106 while still preserving the order from the tree structure.

In an example embodiment, the prompts generally instruct the LLM to generate the creative portions of the desired CDS computer code (the portions that will not or cannot be generated programmatically). In an example embodiment, the system message instructs the LLM 106 to generate an intermediate representation in a particular protocol, such as JSON. Since multiple prompts are passed to the LLM 106, multiple intermediate representations 108A, 108B, 108C are depicted.

Once the intermediate representations 108A, 108B, 108C are all received by the generation component 104, the generation component 104 merges the intermediate representations 108A, 108B, 108C into a single combined intermediate representation 110. In some example embodiments, this merging may be performed to preserve the ordering from the tree structure. Thus, for example, if a second feature and a third feature are both dependent on a first feature, then the intermediate result corresponding to the first feature is placed ahead of the intermediate results corresponding to the second and third features in the combined intermediate representation 110. In other example embodiments, however, the ordering of the intermediate representations 108A, 108B, 108C within the combined intermediate representation 110 is irrelevant. This is the case with JSON files.

Different nomenclature may be used to distinguish among different types of intermediate representations having different relationships, based on the computing environment involved. For example, in some computing environments, it might be helpful to describe intermediate representation 108A as a "base" intermediate representation, as it corresponds to the root of the tree structure 200 and thus acts to establish fundamental aspects of the ultimate goal data structure, while the other intermediate representations 108B, 108C may be described as "specialized" intermediate representations. In other computing environments, an intermediate representation can be referred to as a parent or a child representation (or both), depending on its feature's relationship(s) with other features.

Nevertheless, a programmatic component 112 then performs one or more programmatic functions on the combined intermediate representation 110 and converts it to a final representation 114, which may be compilable computer code (here being a CDS model).

As mentioned earlier, an implementation using JSON as the intermediate representation format and CDS as the final representation format is only one example of a combination of intermediate and final representation formats that the above-described techniques can be used for. Unless otherwise indicated, the scope of the claims shall not be limited to JSON and CDS implementations. In example embodiments, the intermediate representation format may be any format that is not compilable but is still descriptive of computer code, while the final representation format may be any format that is compilable computer code.

The following is an example to illustrate how this process would work. Assume a natural language query as follows: "Generate a JSON entity with fields with one field designated as the most important and with the fields containing user information". From this, a tree structure may be generated or obtained that identifies three features. For ease of reference, the tree structure 200 of Figure 2 will be used. Here, the first feature 202 corresponds to "generate a JSON entity with fields". The second feature 204 corresponds to "have one field designed as the most important". The third feature 206 corresponds to "have the fields contain user information".

Based on this tree structure 200, three separate prompts may be generated. The first prompt, corresponding to first feature 202, may be as follows: Based on the user's prompt, provide the name of the entity and a list of fields in format:
{entityName: "<entityName>", fields: [{name: "<field1>"}, {name:"<field2">}, ...]

The second prompt, corresponding to second feature 204, may be as follows:
Based on the user's prompt and the current object, find the most important field in format:
{mostImportantField: "<mostImportantField>"}

The third prompt, corresponding to the third feature 206, may be as follows:
Based on the user's prompt and the current object, find the fields which contain user information in format:
{uscrInformationFields: } {name: "<uscrInformationFicld>
},..]}

Each of these prompts may then be sent to the LLM, in order, or at least in an ordering used by the tree structure 200. In other words, the tree structure 200 indicates that the second feature 204 and the third feature 206 are dependent on the first feature 202, but not on each other. Thus, the first prompt must be sent to the LLM before either of the second prompt or the third prompt, but the ordering of the second and the third prompt is irrelevant. In other words, the ordering could be first prompt, second prompt, third prompt or first prompt, third prompt, second prompt. Indeed, the second and third prompts could even be sent to the LLM (or separate redundant LLMs) in parallel.

Regardless of the ordering, the LLM may return the following intermediate representation in response to the first prompt:
{entityName: 'Books', fields [{name: 'title'}, {name:'author'}, {name: 'publicationDate'}]}

The LLM may return the following intermediate representation in response to the second prompt:
{mostImportantField: 'title'}

The LLM may return the following intermediate representation in response to the third prompt:
{userinformationFields: [{name 'another}]}

These three intermediate representations may then be merged into the combined intermediate representation:
{entityName: 'Books', fields [{name: 'title'}, {name:'author'}, {name: 'publicationDate'}], mostImportantField: 'title', userInformationFields: [{name 'another}]}

This combined representation can then be compiled into executable computer code.

It should be noted that the above example dealt with features that are non-overlapping or otherwise potentially destructive. In some instances, however, two or more of the features may be overlapping or otherwise destructive to each other if not handled right. For example, if a first field is generated with a first subfield in one feature and that same first field is generated with a second subfield in another feature, then blindly merging the results could cause the first subfield to be overwritten by the second subfield. In such cases, care can be taken to interleave the subfields rather than overwrite them, specifically having the first field contain both the first subfield and the second subfield, rather than one or the other or have the first field defined twice in two different ways.

In some example embodiment, there may be an excess of applied features. As such, a mechanism may be provided to allow the end user to decide which features shall be active, such as by activating or deactivating the items in a feature list.

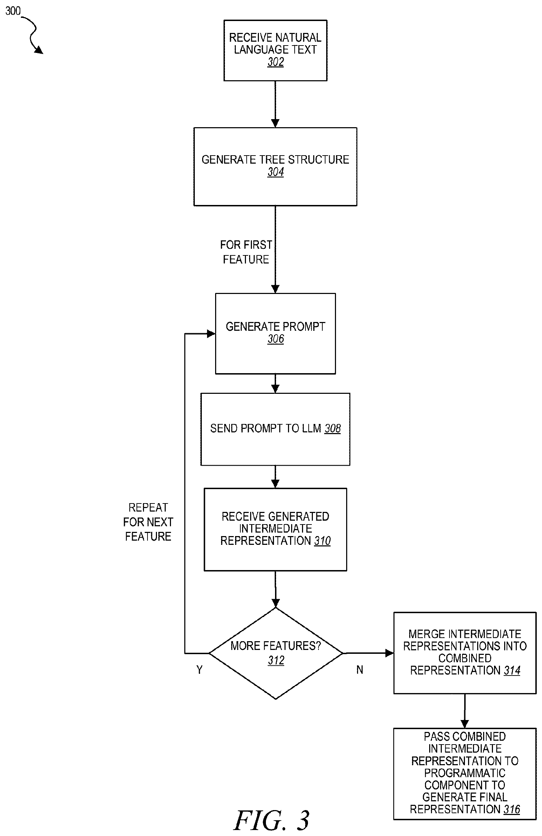

Figure 3 is a flow diagram illustrating a method 300 for automatically generating and refining an object from natural language text, in accordance with an example embodiment. At operation 302, natural language text is received. The natural language text may request automatic generation of text and may contain a plurality of features of the text to be generated. In some example embodiments, the natural language text specifies that the compilable computer code should be in a format that is at least partially proprietary, meaning a format whose schema or format definition is controlled by a single entity. It should be noted that the plurality of features may or may not be all the features specified in the natural language text. This is because a user can select to have certain features in the natural language text ignored for the remainder of the method 300.

At operation 304, a tree structure is generated for the plurality of features, with each feature being a node and edges between the nodes indicating dependencies of features. A loop is then begun for each feature in the plurality of features, in an order based on the tree structure. At operation 306, a prompt for the corresponding feature is generated. This may include appending a system message to the feature and/or the natural language text. The system message includes an instruction to generate code in an intermediate representation format. In some example embodiments, the system message may be tailored to the specific compilable computer code format that is to eventually be generated. Thus, for example, if the natural language text specifies that the compilable computer code should be in CDS format, then a system message corresponding specifically to CDS is retrieved and appended to the natural language text, as opposed to, for example, a system message corresponding specifically to a non-CDS format that might otherwise be used if the natural language text had specified that the compilable computer code should be in that non-CDS format.

At operation 308, the prompt is sent to an LLM. At operation 310, a generated intermediate representation is received from the LLM. At operation 312, it is determined if there are any more features in the plurality of features. If so, then the method 300 loops back to operation 304 for the next feature in the order. If not, then at operation 314 the generated intermediate representations are merged into an combined intermediate representation.

At operation 316, the combined initial intermediate representation is passed to a programmatic component, which applies one or more programmatic functions to the combined intermediate representation, to modify the combined intermediate representation and ultimately produce a final representation.

In view of the disclosure above, various examples are set forth below. It should be noted that one or more features of an example, taken in isolation or combination, should be considered within the disclosure of this application.

Example 1 is a system comprising: at least one hardware processor; and a computer-readable medium storing instructions that, when executed by the at least one hardware processor, cause the at least one hardware processor to perform operations comprising: receiving first natural language text requesting automatic generation of text, the first natural language text comprising a plurality of features of the text; for each feature in the plurality of features: generating a prompt for a corresponding feature; sending the prompt to a large language model (LLM) receiving, from the LLM, a generated intermediate representation; merging the generated intermediate representations for the plurality of features into an combined intermediate representation; and passing the combined intermediate representation to a programmatic component, which validates the combined intermediate representation and converts the combined intermediate representation into a final representation.

In Example 2, the subject matter of Example 1 comprises, wherein the final representation is compilable computer code.

In Example 3, the subject matter of Examples 1-2 comprises, wherein the operations further comprise: generating a tree structure based on the first natural language text, the tree structure containing a node corresponding to each feature of the plurality of features, with edges between nodes signifying dependencies between features.

In Example 4, the subject matter of Example 3 comprises, wherein the prompts are sent to the LLM in an order determined by the tree structure.

In Example 5, the subject matter of Example 4 comprises, wherein the order places prompts corresponding to features that are dependent on other features behind prompts corresponding to the other features.

In Example 6, the subject matter of Examples 2-5 comprises, wherein the compilable computer code is in a format that is at least partially proprietary.

In Example 7, the subject matter of Example 6 comprises, wherein the compilable computer code is a Core Data Services (CDS) model.

In Example 8, the subject matter of Examples 1-7 comprises, wherein the intermediate representation is not compilable.

In Example 9, the subject matter of Example 8 comprises, wherein the intermediate representation is a JavaScript Object Notation (JSON) file.

In Example 10, the subject matter of Examples 1-9 comprises, wherein the programmatic component automatically corrects one or more errors in the intermediate representation.

In Example 11, the subject matter of Examples 1-10 comprises, wherein the plurality of features in the natural language text does not represent all of the features in the natural language text.

In Example 12, the subject matter of Example 11 comprises, wherein at least one feature that is not in the plurality of features but that is in the natural language text is excluded from the plurality of features based on a selection of the at least one feature by a user in a graphical user interface.

Example 13 is a method comprising: receiving first natural language text requesting automatic generation of text, the first natural language text comprising a plurality of features of the text; for each feature in the plurality of features: generating a prompt for a corresponding feature; sending the prompt to a large language model (LLM) receiving, from the LLM, a generated intermediate representation; merging the generated intermediate representations for the plurality of features into an combined intermediate representation; and passing the combined intermediate representation to a programmatic component, which validates the combined intermediate representation and converts the combined intermediate representation into a final representation.

In Example 14, the subject matter of Example 13 comprises, wherein the final representation is compilable computer code.

In Example 15, the subject matter of Example 14 comprises, generating a tree structure based on the first natural language text, the tree structure containing a node corresponding to each feature of the plurality of features, with edges between nodes signifying dependencies between features.

In Example 16, the subject matter of Example 15 comprises, wherein the prompts are sent to the LLM in an order determined by the tree structure.

In Example 17, the subject matter of Example 16 comprises, wherein the order places prompts corresponding to features that are dependent on other features behind prompts corresponding to the other features.

Example 18 is a non-transitory machine-readable medium storing instructions which, when executed by one or more processors, cause the one or more processors to perform operations comprising: receiving first natural language text requesting automatic generation of text, the first natural language text comprising a plurality of features of the text; for each feature in the plurality of features: generating a prompt for a corresponding feature; sending the prompt to a large language model (LLM) receiving, from the LLM, a generated intermediate representation; merging the generated intermediate representations for the plurality of features into an combined intermediate representation; and passing the combined intermediate representation to a programmatic component, which validates the combined intermediate representation and converts the combined intermediate representation into a final representation.

In Example 19, the subject matter of Example 18 comprises, wherein the plurality of features in the natural language text does not represent all of the features in the natural language text.

In Example 20, the subject matter of Examples 18-19 comprises, wherein at least one feature that is not in the plurality of features but that is in the natural language text is excluded from the plurality of features based on a selection of the at least one feature by a user in a graphical user interface.

Example 21 is at least one machine-readable medium comprising instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

Example 24 is a method to implement of any of Examples 1-20.

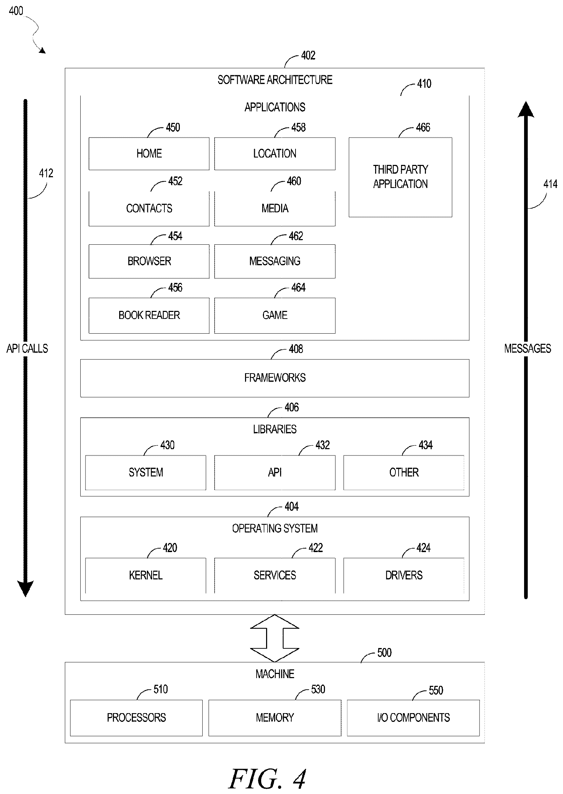

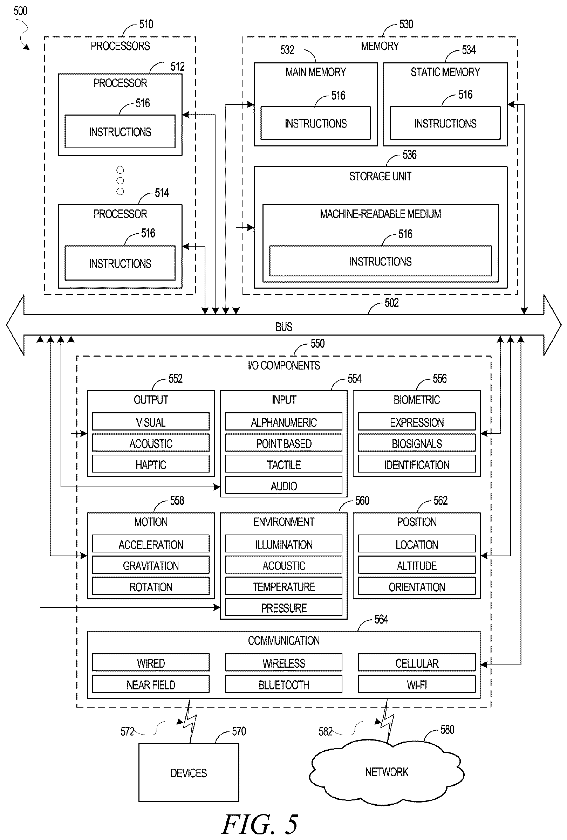

Figure 4 is a block diagram 400 illustrating a software architecture 402, which can be installed on any one or more of the devices described above. Figure 4 is merely a non-limiting example of a software architecture, and it will be appreciated that many other architectures can be implemented to facilitate the functionality described herein. In various embodiments, the software architecture 402 is implemented by hardware such as a machine 500 of Figure 5 that includes processors 510, memory 530, and input/output (I/O) components 550. In this example architecture, the software architecture 402 can be conceptualized as a stack of layers where each layer may provide a particular functionality. For example, the software architecture 402 includes layers such as an operating system 404, libraries 406, frameworks 408, and applications 410. Operationally, the applications 410 invoke API calls 412 through the software stack and receive messages 414 in response to the API calls 412, consistent with some embodiments.

In various implementations, the operating system 404 manages hardware resources and provides common services. The operating system 404 includes, for example, a kernel 420, services 422, and drivers 424. The kernel 420 acts as an abstraction layer between the hardware and the other software layers, consistent with some embodiments. For example, the kernel 420 provides memory management, processor management (e.g., scheduling), component management, networking, and security settings, among other functionalities. The services 422 can provide other common services for the other software layers. The drivers 424 are responsible for controlling or interfacing with the underlying hardware, according to some embodiments. For instance, the drivers 424 can include display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 406 provide a low-level common infrastructure utilized by the applications 410. The libraries 406 can include system libraries 430 (e.g., C standard library) that can provide functions such as memory allocation functions, string manipulation functions, mathematic functions, and the like. In addition, the libraries 406 can include API libraries 432 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 406 can also include a wide variety of other libraries 434 to provide many other APIs to the applications 410.

The frameworks 408 provide a high-level common infrastructure that can be utilized by the applications 410, according to some embodiments. For example, the frameworks 408 provide various GUI functions, high-level resource management, high-level location services, and so forth. The frameworks 408 can provide a broad spectrum of other APIs that can be utilized by the applications 410, some of which may be specific to a particular operating system 404 or platform.

In an example embodiment, the applications 410 include a home application 450, a contacts application 452, a browser application 454, a book reader application 456, a location application 458, a media application 460, a messaging application 462, a game application 464, and a broad assortment of other applications, such as a third-party application 466. According to some embodiments, the applications 410 are programs that execute functions defined in the programs. Various programming languages can be employed to create one or more of the applications 410, structured in a variety of manners, such as object-oriented programming languages (e.g., Objective-C, Java, or C++) or procedural programming languages (e.g., C or assembly language). In a specific example, the third-party application 466 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 466 can invoke the API calls 412 provided by the operating system 404 to facilitate functionality described herein.

Figure 5 illustrates a diagrammatic representation of a machine 500 in the form of a computer system within which a set of instructions may be executed for causing the machine 500 to perform any one or more of the methodologies discussed herein, according to an example embodiment. Specifically, Figure 5 shows a diagrammatic representation of the machine 500 in the example form of a computer system, within which instructions 516 (e.g., software, a program, an application, an applet, an app, or other executable code) for causing the machine 500 to perform any one or more of the methodologies discussed herein may be executed. For example, the instructions 516 may cause the machine 500 to execute the method 300 of Figure 3. Additionally, or alternatively, the instructions 516 may implement Figures 1-3 and so forth. The instructions 516 transform the general, non-programmed machine 500 into a particular machine 500 programmed to carry out the described and illustrated functions in the manner described. In alternative embodiments, the machine 500 operates as a standalone device or may be coupled (e.g., networked) to other machines. In a networked deployment, the machine 500 may operate in the capacity of a server machine or a client machine in a server-client network environment, or as a peer machine in a peer-to-peer (or distributed) network environment. The machine 500 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 516, sequentially or otherwise, that specify actions to be taken by the machine 500. Further, while only a single machine 500 is illustrated, the term "machine" shall also be taken to include a collection of machines 500 that individually or jointly execute the instructions 516 to perform any one or more of the methodologies discussed herein.

The machine 500 may include processors 510, memory 530, and I/O components 550, which may be configured to communicate with each other such as via a bus 502. In an example embodiment, the processors 510 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 512 and a processor 514 that may execute the instructions 516. The term "processor" is intended to include multi-core processors that may comprise two or more independent processors (sometimes referred to as "cores") that may execute instructions 516 contemporaneously. Although Figure 5 shows multiple processors 510, the machine 500 may include a single processor 512 with a single core, a single processor 512 with multiple cores (e.g., a multi-core processor 512), multiple processors 512, 514 with a single core, multiple processors 512, 514 with multiple cores, or any combination thereof.

The memory 530 may include a main memory 532, a static memory 534, and a storage unit 536, each accessible to the processors 510 such as via the bus 502. The main memory 532, the static memory 534, and the storage unit 536 store the instructions 516 embodying any one or more of the methodologies or functions described herein. The instructions 516 may also reside, completely or partially, within the main memory 532, within the static memory 534, within the storage unit 536, within at least one of the processors 510 (e.g., within the processor's cache memory), or any suitable combination thereof, during execution thereof by the machine 500.

The I/O components 550 may include a wide variety of components to receive input, provide output, produce output, transmit information, exchange information, capture measurements, and so on. The specific I/O components 550 that are included in a particular machine will depend on the type of machine. For example, portable machines such as mobile phones will likely include a touch input device or other such input mechanisms, while a headless server machine will likely not include such a touch input device. It will be appreciated that the I/O components 550 may include many other components that are not shown in Figure 5. The 1/O components 550 are grouped according to functionality merely for simplifying the following discussion, and the grouping is in no way limiting. In various example embodiments, the I/O components 550 may include output components 552 and input components 554. The output components 552 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 554 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 550 may include biometric components 556, motion components 558, environmental components 560, or position components 562, among a wide array of other components. For example, the biometric components 556 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 558 may include acceleration sensor components (e.g., accelerometer), gravitation sensor components, rotation sensor components (e.g., gyroscope), and so forth. The environmental components 560 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 562 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 550 may include communication components 564 operable to couple the machine 500 to a network 580 or devices 570 via a coupling 582 and a coupling 572, respectively. For example, the communication components 564 may include a network interface component or another suitable device to interface with the network 580. In further examples, the communication components 564 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 570 may be another machine or any of a wide variety of peripheral devices (e.g., coupled via a USB).

Moreover, the communication components 564 may detect identifiers or include components operable to detect identifiers. For example, the communication components 564 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 564, such as location via Internet Protocol (IP) geolocation, location via Wi-Fi^{®} signal triangulation, location via detecting an NFC beacon signal that may indicate a particular location, and so forth.

The various memories (e.g., 530, 532, 534, and/or memory of the processor(s) 510) and/or the storage unit 536 may store one or more sets of instructions 516 and data structures (e.g., software) embodying or utilized by any one or more of the methodologies or functions described herein. These instructions (e.g., the instructions 516), when executed by the processor(s) 510, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

**In** various example embodiments, one or more portions of the network 580 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 580 or a portion of the network 580 may include a wireless or cellular network, and the coupling 582 may be a Code Division Multiple Access (CDMA) connection, a Global System for Mobile communications (GSM) connection, or another type of cellular or wireless coupling. In this example, the coupling 582 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 516 may be transmitted or received over the network 580 using a transmission medium via a network interface device (e.g., a network interface component included in the communication components 564) and utilizing any one of a number of well-known transfer protocols (e.g., HTTP). Similarly, the instructions 516 may be transmitted or received using a transmission medium via the coupling 572 (e.g., a peer-to-peer coupling) to the devices 570. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 516 for execution by the machine 500, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A system comprising:
at least one hardware processor; and
a computer-readable medium storing instructions that, when executed by the at least one hardware processor, cause the at least one hardware processor to perform operations comprising:
receiving first natural language text requesting automatic generation of generated text, the first natural language text comprising a plurality of features of the generated text;
for each feature in the plurality of features:
generating a prompt for a corresponding feature;
sending the prompt to a large language model (LLM), receiving, from the LLM, a generated intermediate representation;
merging the generated intermediate representations for the plurality of features into a combined intermediate representation; and
passing the combined intermediate representation to a programmatic component, which validates the combined intermediate representation and converts the combined intermediate representation into a final representation.

2. The system of claim 1, wherein the final representation is compilable computer code.

3. The system of claim 1 or 2, wherein the operations further comprise:
generating a tree structure based on the first natural language text, the tree structure containing a node corresponding to each feature of the plurality of features, with edges between nodes signifying dependencies between features.

4. The system of claim 3, wherein the prompts are sent to the LLM in an order determined by the tree structure; and
wherein, optionally, the order places prompts corresponding to features that are dependent on other features behind prompts corresponding to the other features.

5. The system of claim 2, wherein the compilable computer code is in a format that is at least partially proprietary; and
wherein, optionally, the compilable computer code is a Core Data Services (CDS) model.

6. The system of any one of claims 1 to 5, wherein the intermediate representation is not compilable; and
wherein, optionally, the intermediate representation is a JavaScript Object Notation (JSON) file.

7. The system of any one of claims 1 to 6, wherein the programmatic component automatically corrects one or more errors in the intermediate representation.

8. The system of any one of claims 1 to 7, wherein the plurality of features in the natural language text does not represent all of the features in the natural language text; and wherein, optionally, at least one feature that is not in the plurality of features but that is in the natural language text is excluded from the plurality of features based on a selection of the at least one feature by a user in a graphical user interface.

9. A method comprising:
receiving first natural language text requesting automatic generation of text, the first natural language text comprising a plurality of features of the text;
for each feature in the plurality of features:
generating a prompt for a corresponding feature;
sending the prompt to a large language model (LLM);
receiving, from the LLM, a generated intermediate representation;
merging the generated intermediate representations for the plurality of features into a combined intermediate representation; and
passing the combined intermediate representation to a programmatic component, which validates the combined intermediate representation and converts the combined intermediate representation into a final representation.

10. The method of claim 9, wherein the final representation is compilable computer code.

11. The method of claim 9 or 10, further comprising:
generating a tree structure based on the first natural language text, the tree structure containing a node corresponding to each feature of the plurality of features, with edges between nodes signifying dependencies between features.

12. The method of claim 11, wherein the prompts are sent to the LLM in an order determined by the tree structure;
wherein, optionally, the order places prompts corresponding to features that are dependent on other features behind prompts corresponding to the other features.

13. A non-transitory machine-readable medium storing instructions which, when executed by one or more processors, cause the one or more processors to perform operations comprising:
receiving first natural language text requesting automatic generation of text, the first natural language text comprising a plurality of features of the text;
for each feature in the plurality of features:
generating a prompt for a corresponding feature;
sending the prompt to a large language model (LLM) receiving, from the LLM, a generated intermediate representation;
merging the generated intermediate representations for the plurality of features into an combined intermediate representation; and
passing the combined intermediate representation to a programmatic component, which validates the combined intermediate representation and converts the combined intermediate representation into a final representation.

14. The non-transitory machine-readable medium of claim 13, wherein the plurality of features in the natural language text does not represent all of the features in the natural language text.

15. The non-transitory machine-readable medium of claim 13 or 14, wherein at least one feature that is not in the plurality of features but that is in the natural language text is excluded from the plurality of features based on a selection of the at least one feature by a user in a graphical user interface.
